# EUROPEAN PATENT APPLICATION

(11) **EP 2 840 463 A1**
(43) Date of publication of application: **25.02.2015**
(21) Application number: 14002425.8
(22) Date of filing: 14.07.2014
(51) Int. Cl.: G06F 3/01

(54) **Haptically enabled viewing of sporting events**

(30) Priority: 23.08.2013 US 201313974314
(71) Applicant: Immersion Corporation, San Jose, CA 95134 (US)
(72) Inventor: Saboune, Jamal, Quebec, H2W 1X9 (CA); Cruz-Hernandez, Juan Manuel, Quebec, H3Z 1T1 (CA); Ullrich, Christopher J., Ventura, CA 93003 (US); Birnbaum, David, Oakland, CA 94607 (US)
(74) Representative: Müller-Boré & Partner Patentanwälte PartG mbB

(57) **Abstract**

A system that generates haptic effects for a sporting event receives sporting event data that includes different types of event data, each type having a corresponding characteristic. The system assigns a different type of haptic effect to each different type of event data, and generates a haptic signal that corresponds to each type of haptic effect. The system then transmits the haptic signal to a haptic output device.

## Description

### FIELD

One embodiment is directed generally to haptic effects, and in particular to haptic effects generated in conjunction with a sporting event.

### BACKGROUND INFORMATION

Many types of devices, including mobile devices, wearable devices, furniture, etc., in order to provide alerts or otherwise transmit information to a user, may include kinesthetic feedback (such as active and resistive force feedback) and/or tactile feedback (such as vibration, texture, and heat), known collectively as "haptic feedback" or "haptic effects". For example, vibration effects, or vibrotactile haptic effects, may be useful in providing cues to users of electronic devices to alert the user to specific events, or provide realistic feedback to create greater sensory immersion within a simulated or virtual environment. A user's experience in viewing an event, such as a sporting event, can be enhanced by adding haptic effects to the audio and video components of the event.

### SUMMARY

One embodiment is a system that generates haptic effects for a sporting event. The system receives sporting event data that includes different types of event data, each type having a corresponding characteristic. The system assigns a different type of haptic effect to each different type of event data, and generates a haptic signal that corresponds to each type of haptic effect. The system then transmits the haptic signal to a haptic output device.

### BRIEF DESCRIPTION OF THE DRAWINGS

Fig. 1 is a block diagram of a system that can implement the server/controller in one embodiment, and can implement any of the additional devices in separate embodiments.
Fig. 2 illustrates an example of a complete recap of a fighting event by an electronic scoring system.
Fig. 3 is a block diagram illustrating event detection and haptic effect generation in accordance with one embodiment.
Fig. 4 is a block diagram illustrating two different haptic effect playback embodiments in accordance with the present invention.
Fig. 5 is a flow diagram of the functionality of the haptically enabled sporting event module that haptically enables sporting events and generates the haptic effects, or transmits haptic signals to other devices that generate the haptic effects.

### DETAILED DESCRIPTION

One embodiment receives event data from a scoring system of a sporting event, such as a fighting type sporting event scoring system that records punches, kicks, etc. The event data is converted to haptic effects that, when rendered on a haptic output device, "reproduces" the event data. For example, the viewer will "feel" each punch or kick through interaction with the haptic output device.

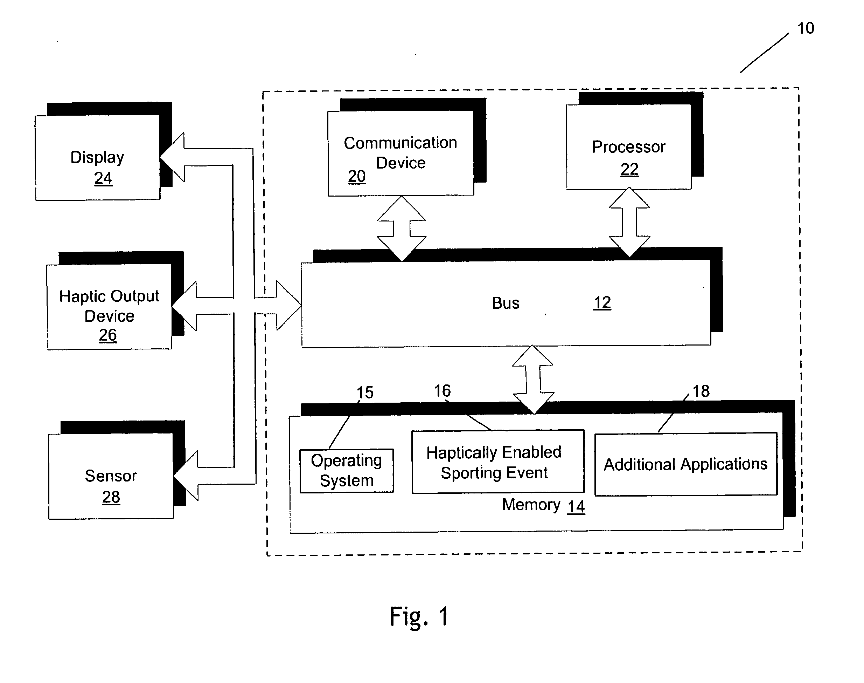

In one embodiment, a server/controller receives the sporting event data and generates corresponding haptic effects locally, or sends haptic signals to additional devices which then generate the haptic effects. Fig. 1 is a block diagram of a system 10 that can implement the server/controller in one embodiment, and can implement any of the additional devices in separate embodiments. For any of these implementations, all of the elements shown in Fig. 1 may not be needed or present. For example, in the server where haptic effect signals are transmitted to other devices, and not generated locally, the haptic output device shown in Fig. 1 may not be included.

System 10 includes a bus 12 or other communication mechanism for communicating information, and a processor 22 coupled to bus 12 for processing information. Processor 22 may be any type of general or specific purpose processor. Processor 12 can decide what haptic effects are to be played and the order in which the effects are played based on high level parameters. In general, the high level parameters that define a particular haptic effect include magnitude, frequency and duration. Low level parameters such as streaming motor commands could also be used to determine a particular haptic effect. A haptic effect may be considered "dynamic" if it includes some variation of these parameters when the haptic effect is generated or a variation of these parameters based on a user's interaction.

System 10 further includes a memory 14 for storing information and instructions to be executed by processor 22. Memory 14 can be comprised of any combination of random access memory ("RAM"), read only memory ("ROM"), static storage such as a magnetic or optical disk, flash memory, or any other type of computer-readable medium.

In a specific configuration the computer program product may be tangibly embodied as a computer readable medium and/or embodied as a signal or data stream. A computer readable medium may be any available medium that can be accessed by processor 22 and may include both a volatile and nonvolatile medium, a removable and non-removable medium, a communication medium, and a storage medium. A communication medium may include computer readable instructions, data structures, program modules or other data in a modulated data signal such as a carrier wave or other transport mechanism, and may include any other form of an information delivery medium known in the art. A storage medium may include RAM, flash memory, ROM, erasable programmable read-only memory ("EPROM"), electrically erasable programmable read-only memory ("EEPROM"), registers, hard disk, a removable disk, a compact disk read-only memory ("CD-ROM"), or any other form of a storage medium known in the art.

In one embodiment, memory 14 stores software modules that provide functionality when executed by processor 22. The modules include an operating system 15 that provides operating system functionality for system 10. The modules further include a haptically enabled sporting event module 16 that haptically enables sporting events and generates the haptic effects, or transmits haptic signals to other devices that generate the haptic effects. System 10 will typically include one or more additional application modules 18 to include additional functionality, such as software to support "TouchSens^{®}" Haptic Feedback Technology from Immersion Corp.

System 10 further includes a communication device 20, such as a network interface card, to provide wireless or wired network communication, such as Bluetooth, infrared, radio, Wi-Fi, or cellular network communication. The communication is between the server and the other devices that generate haptic effects, in some embodiments. If system 10, for example, implements a remote device such as a wearable device that generates haptic effects, communication device 20 will receive a haptic signal from another system 10. In some embodiments, system 10 is present at the live sporting event and transmits haptic effects over the sporting event broadcast, in conjunction with the broadcast audio and video channels.

Processor 22 is further coupled via bus 12 to a display 24, such as a Liquid Crystal Display ("LCD"), for displaying a graphical representation or user interface to a user. The display 24 may be a touch-sensitive input device, such as a touchscreen, configured to send and receive signals from processor 22, and may be a multi-touch touchscreen. Display 24 can generate video effects, and further can include a speaker to generate audio effects.

System 10 further includes one or more haptic output devices 26. Processor 22 may transmit a haptic signal associated with a haptic effect to haptic output device 26, which in turn outputs haptic effects. Haptic output device 26 in one embodiment is an actuator such as, for example, an electric motor, an electro-magnetic actuator, a voice coil, a linear resonant actuator, a piezoelectric actuator, a shape memory alloy, an electro-active polymer, a solenoid, an eccentric rotating mass motor ("ERM") or a linear resonant actuator ("LRA").

In addition to an actuator, haptic output device 26 may be a nonmechanical or non-vibratory device such as devices that use electrostatic friction ("ESF"), ultrasonic surface friction ("USF"), devices that induce acoustic radiation pressure with an ultrasonic haptic transducer, devices that use a haptic substrate and a flexible or deformable surface or shape changing devices and that may be attached to a user's body, devices that provide projected haptic output such as a puff of air using an air jet, etc. Multiple haptic output devices with multiple haptic effects can generate a haptic effect.

The generated haptic effects can include a wide range of effects and technologies, including vibrations, deformation, squeezing, poking, stretching, surface friction, heat, etc. A device that generates haptic effects, and includes haptic output device 26, can be a wearable device (e.g., a bracelet, armband, glove, jacket, vest, pair of glasses, shoes, belt, etc.), a handheld device (e.g., a mobile phone, computer mouse, etc.), haptically enabled furniture (e.g., a chair, couch, etc.) or any other haptically enabled device.

System 10 in one embodiment further includes one or more sensors 28. Sensor 28 may be an accelerometer, a gyroscope, a Global Positioning System ("GPS") sensor, a touch-sensitive input device (e.g., touchscreen, touchpad), a texture stylus, an imaging sensor, or some other type of sensor. Sensor 28 may be configured to detect changes in acceleration, inclination, inertia, or location. Sensor 28 may also be a location sensor, rotary velocity sensor, light sensor, pressure sensor, texture sensor, camera, microphone, or other type of sensor. Sensor 28 may be coupled to sporting event related items, such as boxing gloves, a soccer ball, a tennis racket, a helmet, etc., to receive signals that are translated/represented as haptic effects.

One embodiment, as described below, is specifically adapted to haptically enabled fighting based sporting events, such as boxing, martial arts, Mixed Martial Arts ("MMA"), etc. This embodiment offers an immersive experience to fans while watching these types of events by letting the viewers feel the important moments in the fight when they happen. Examples of these moments include punches/strikes landed or evaded, knockouts, successful takedowns, submission attempts, etc. Other embodiments can be used for other types of sporting events.

The fighting based embodiment can notify the viewer when, and ideally where, a hit or a kick is made by one fighter on another during a televised fight. It can also notify the viewer about other interesting events (e.g., missed hits, submissions, knock-out, etc.). This notification can augment the viewing experience with the haptic feedback and provide an immersive experience for the viewer in the context of a fight broadcast.

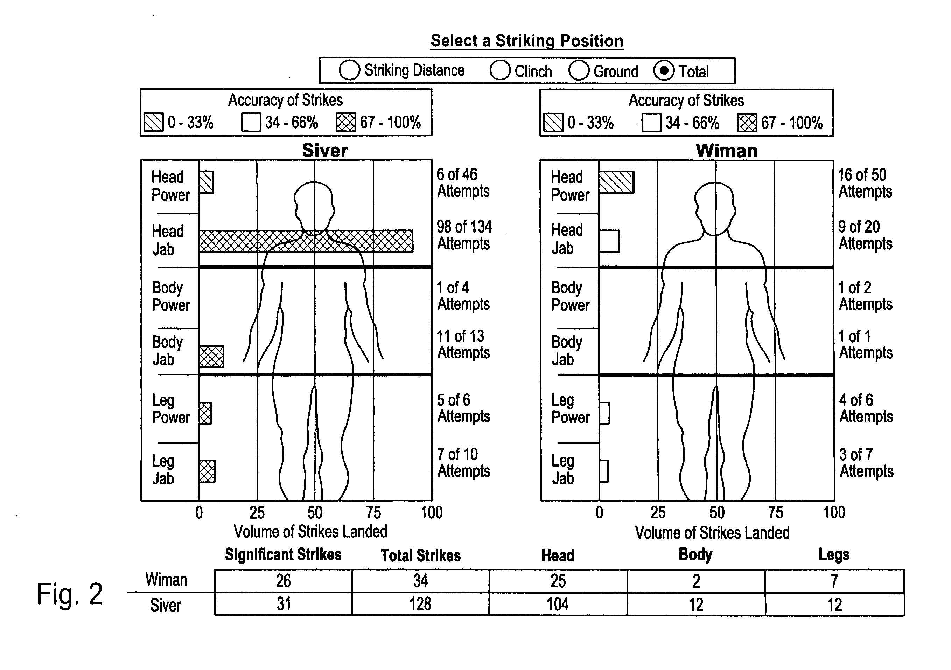

In one embodiment, whenever a hit/event is detected, system 10 sends a preset haptic signal to be played on an available remote haptic device, or local to system 10, using haptic output device 26. In one embodiment, the detection of an event can be received through an electronic scoring system. Examples of such systems include "Fightmetric" and "Compustrike" for MMA type events. With known electronic scoring systems, different observers in proximity to the ring or octagon indicate the time, the location and the outcome (e.g., missed attempt, landed hit, submission, etc.) of the fighters' acts. The observers accomplish this task using special keyboards. This information is then saved to a file to be visualized later. At the end of the fight a complete recap of the event is produced by the system, an example of which is shown in Fig. 2. Embodiments can capture the scoring data by parsing the text information and transforming it to modulate an adequate predesigned haptic effect.

In addition to using scoring data as a source of event data, embodiments can use image processing. Computer vision can infer the fighters' acts. Embodiments can uses multiple camera angles/views and stereo vision to track the fighters' limb movements and detect their three dimensional positions. The positions can also be refined using motion models and stochastic methods such as Kalman filtering. When the three dimensional positions overlap, an indication that the two fighters are touching can be generated. For example if one fighter's three dimensional hand position lands on the other's face position and suddenly takes a reverse movement, a "hit" can be inferred.

Another embodiment uses sensor based detection to receive event data in addition to or to supplement the previously described event data. Event data can be generated by analyzing readings from sensors attached to the fighters and describing their movements. For example, if the glove tips of the fighters are equipped with contact switches, any hit involving the glove will turn the switch on. In another example, a set of accelerometers can be attached to the arms and legs of the fighters or embedded in the gloves or shoes. By analyzing the signals from these sensors, hits, kicks, and misses can be detected using pattern matching approaches. This "classification" based task can use features from the acceleration signals such as change rate, frequency range, etc., and use classifiers such as Hidden Markov Models ("HMM"), Gaussian Mixture Model ("GMM"), support vector machine ("SVM"), etc.

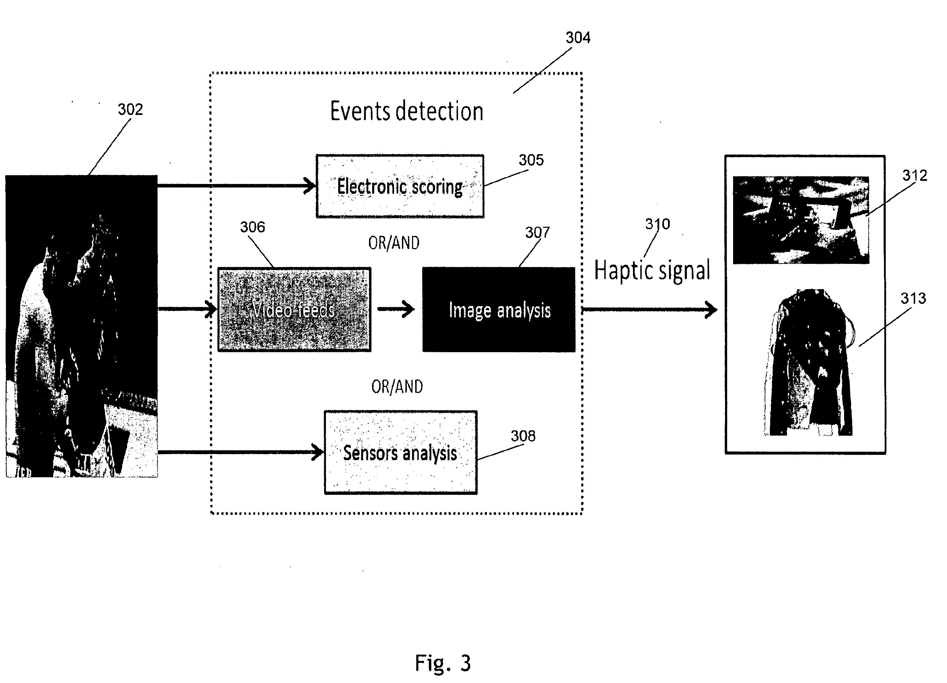

Fig. 3 is a block diagram illustrating event detection and haptic effect generation in accordance with one embodiment. The functionality of Fig. 3 may be implemented by one or more systems such as system 10 of Fig. 1. From a fighting event 302, an event detection module 304 detects fighting event data using either an electronic scoring system 305, video image analysis 307 of video feeds 306, or sensors analysis 308, or any combination of these techniques. A haptic signal 310 is generated from events detection module 304. Haptic signal 310 is rendered into a haptic effect in a haptic output device such as a tablet 312 or haptic jacket 313. Event detection module 304 may be implemented by haptically enabled sporting event module 16 of Fig. 1.

Embodiments use any of the event data captured as described above and can create a relevant corresponding haptic effect. The location, intensity and nature of the effect to be played can be relative to the characteristics of the event data. For example a knockout hit can be translated into a strong "bump" while a missed kick can be represented by a slight vibration. In some embodiments, the haptic playback/output device is equipped with multiple actuators, such as with a haptic jacket, haptic chair, etc. In these embodiments, the playback of the effect is combined with a selection of one or more of the available actuators in order to best represent the event. For example if the user is wearing a haptic jacket and one fighter receives a kick on his left ribs, the user should feel the "bump" on his left ribs too. The effect could also be played using multiple actuators simultaneously. For example, a rear neck choke submission can be represented by the activation of all the actuators around the neck. If the playback device is a mono-actuator (e.g., a mobile device with a single actuator) then all events/effects are played using the single actuator.

When processing live broadcast fights, embodiments can delay the video display for a few seconds in order to accomplish the events detection and conversion to haptics. Using predesigned effects (i.e., haptic effects that are pre-stored) and the event's features/characteristics, the haptic effect control signals are synthesized and then sent to specific actuators in the haptic playback device, at a specific time, in order to display the haptic effect synchronously with the related images. In another embodiment, the invention detects an event and describes it with a special coding indicating the actuator position, the predesigned effect number, its amplitude, and its timing. The system sends the code to the playback device that analyzes it and sends the adequate control signals to the actuator(s). In this embodiment the predesigned effects are embedded inside the playback device and not the "analysis" system.

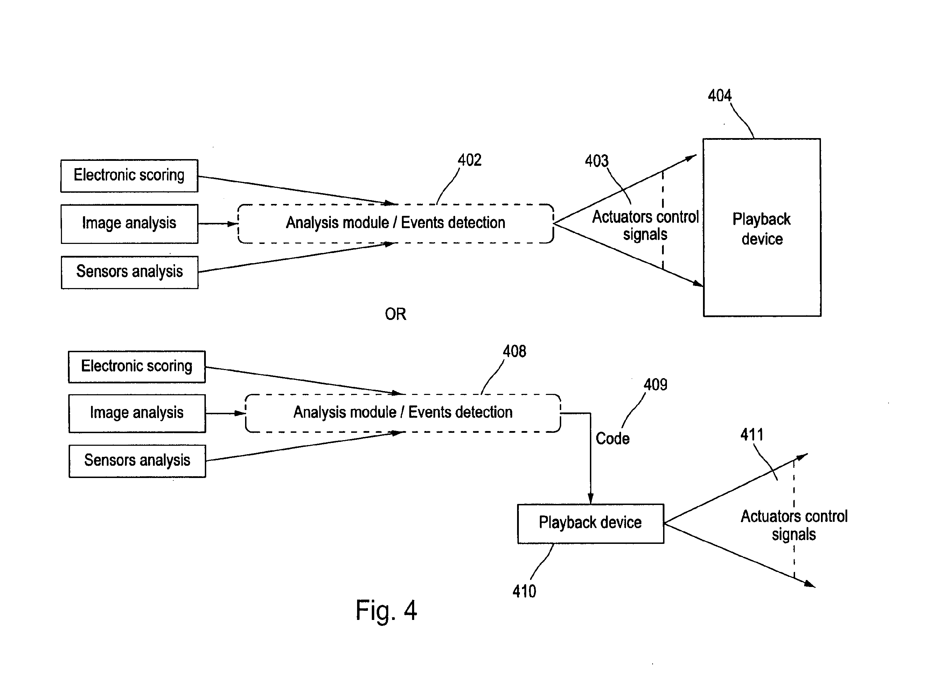

Fig. 4 is a block diagram illustrating two different haptic effect playback embodiments in accordance with the present invention. The functionality of Fig. 4 may be implemented by one or more systems such as system 10. An analysis module/event detections module 402 receives detected events and generates corresponding actuator control signals 403. The signals are sent to a haptically enabled playback device 404 which generates the haptic effects. In another embodiment, an analysis module/events detection module 408 receives detected events and generates a code 409 that corresponds to a stored haptic effect. The code is received by a playback device 410 that generates/retrieves actuator control signal 411 that correspond to code 409. Playback device 410 can control different actuators, and therefore it is in charge of managing all of them in one embodiment. Playback device 410 can also manage the effects to be played and can use these to generate the control signals for each of the controlled actuators. In one embodiment, each of the actuator control signals 411 will be coupled to a single actuator (not shown in Fig. 4). In other embodiments, the actuators can be located in the playback devices themselves, in which case the control signals are also internal to the playback devices.

In rendering or playing haptic effects, embodiments may include special media player software (mobile or desktop) or a hardware box that reads a broadcast feed and assigns each of the different tracks (audio, video, haptics) to the adequate playback platform. In the framework of mobile computing (i.e., smartphones, tablets) the device's actuator will be responsible for playing the haptics, while in the other scenarios, the experience can be more realistic by designing clothes embedded with actuators in a manner to deliver the haptic feedback at the viewer's relevant body part (e.g., the body part where the punch has landed).

When generating haptic effects from recorded feeds, embodiments analyze the electronic scoring system data and/or the images and/or the sensors data, and timestamps the events along with the number and intensity of the predesigned haptic effect to be associated with the event data, as well as the actuator's number. This data can be saved in an Extensible Markup Language ("XML") file. The haptic device can read this file on playback, and then play the effect described by its number, its intensity level, its time of display and the actuator's position. In another embodiment, the system will create a haptic track containing the actuators' control signals that can be encoded along with the other tracks (i.e., audio, video). On playback, the haptic device extracts and reads the haptic track signals in order to control the appropriate actuators. In a single actuator configuration, all the control signals will be mapped to the same actuator.

One embodiment, as described above, broadcasts haptic effects information on one or more channels from a sporting event in conjunction with the multiple existing sporting event broadcast signal channels, such as High Definition ("HD") video, 3D video, 5.1 sound channels, metadata, etc. For the "live" broadcast embodiments, event data can be generated by one or more sensors (e.g., sensor 28 of Fig. 1) located in the sporting venue or on individual athletes. The sensors can include audio sensors and/or acceleration sensors or other tactile or bio sensing (i.e., plethysmograph) sensors. An encoder (e.g., haptically enabled sporting event module 16 of Fig. 1) can take one or more sensor signals and encode them into a broadcast signal. This can be in the form of a dedicated track in an Moving Picture Experts Group ("MPEG") container or as unused/underutilized spectral components in the existing audio or video streams.

A transmitting device (e.g., communication device 20 of Fig. 1) is used to distribute the encoded stream to remote viewers. The transmitting device can include Internet Protocol ("IP") networks, over the air ("OTA") analog broadcast, satellite or other existing sporting transmission methods.

Embodiments include an endpoint that can be implemented by system 10 of Fig. 1 and that decodes the broadcast stream into video, audio and tactile components, and a "display" for each of the video, audio and tactile streams. The display can be in the same physical artifact for all streams or consist of two or more artifacts (e.g., a tablet for video, wireless headphones for audio, and a wearable actuator for tactile).

The remote viewer may be a person watching the sporting event on a mobile device such as a phone or tablet. In this embodiment, cellular or Wi-Fi technologies could be used for transmission, and the visual and haptic content would be consumed on the same device. The viewer may also be a person watching the sporting event on a large screen TV, but using a secondary device such as a phone, tablet, or remote control as a "second screen". During sporting events, "second screen" devices are increasingly used to view metadata or extended information about the event, such as sports statistics and advertising. In this embodiment, the visual content would be primarily consumed on the large screen, but haptic content could be experienced with the secondary device. The device could be held in the hand, or kept in the pocket while still displaying haptic content.

The viewer may be a person watching the sporting event live in the stadium or arena. In this embodiment, the mobile device would provide additional immersion in the game and would enhance the general atmosphere and setting of the game. The device could be held in the hand, or kept in the pocket while still displaying haptic content.

In addition to being embodied in a mobile device, embodiments could be created for seating, either in the arena/stadium, or in a home theater, and the seats could immerse the fans in the games through vibration based on sensor input from the game in a similar manner as with mobile devices.

In one embodiment, the endpoints in the broadcast embodiments can be Reverb/Reverb HD enabled endpoints using "Reverb" automatic haptic feedback for media from Immersion Corp., along with an audio encoding that uses underutilized spectral components. This would enable mobile devices to directly render tactile information such as a quarterback getting sacked on existing hardware supplemented by the inventive functionality in accordance to embodiments.

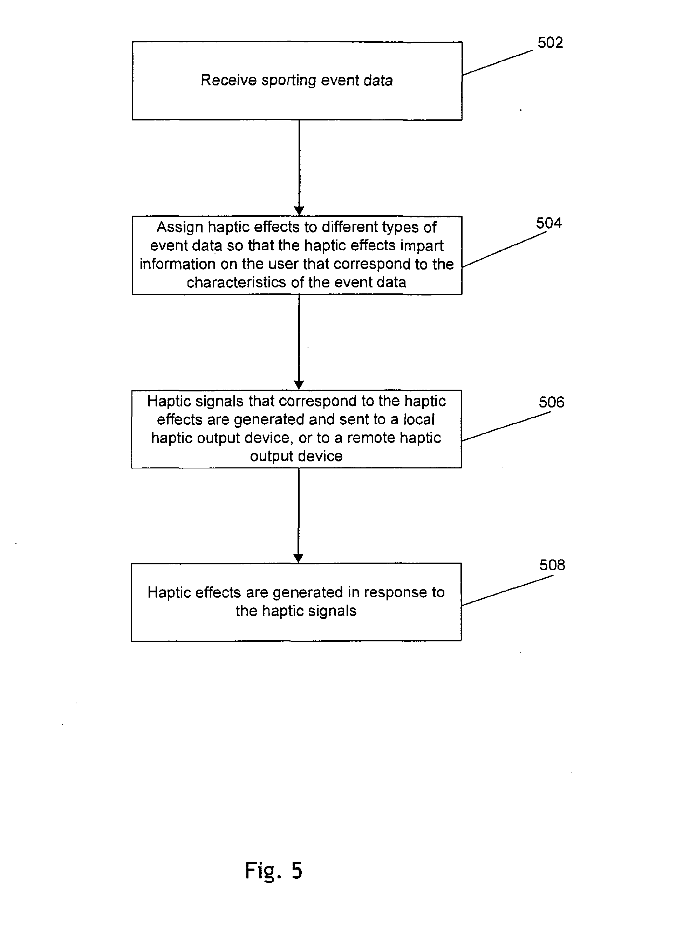

Fig. 5 is a flow diagram of the functionality of haptically enabled sporting event module 16 that haptically enables sporting events and generates the haptic effects, or transmits haptic signals to other devices that generate the haptic effects. In one embodiment, the functionality of the flow diagram of Fig. 5 is implemented by software stored in memory or other computer readable or tangible medium, and executed by a processor. In other embodiments, the functionality may be performed by hardware (e.g., through the use of an application specific integrated circuit ("ASIC"), a programmable gate array ("PGA"), a field programmable gate array ("FPGA"), etc.), or any combination of hardware and software.

At 502, event data from fighting or other type of sporting events are detected or received. The events can be detected through an electronic scoring system that receives manual annotations, video analysis, and/or by receiving sensor data from sensors embedded in various sporting equipment.

At 504, haptic effects are assigned to different types of event data so that the haptic effects impart information on the user that correspond to the characteristics of the event data. In other embodiments, the haptic effects can be generated based on event detection, such as automated audio to haptic effect conversion. Further, the haptic effects can be authored to accompany the sporting events. The authoring could be done either offline after the sporting event ends, so it is only available for prerecorded events (e.g., for use in highlight reels), or "semi-live" when there is enough time during the broadcast delay to author simple haptic effects with known haptic effect authoring tools.

At 506, haptic signals that correspond to the haptic effects are generated and sent to a local haptic output device, or to a remote haptic output device. In another embodiment, a code that identifies a stored haptic signal is instead sent to the remote haptic output device. Further, if more than one haptic output devices are included in the playback device, a selection of one or more specific output devices may also be generated.

At 508, haptic effects are generated in response to the haptic signals.

As disclosed, embodiments receive sporting event data and generate corresponding haptic effects. For fighting events, in general, while watching the regular television feed, the viewers generally do not see all the punches/strikes and often cannot clearly distinguish between the landed ones and the missed ones in real-time as the action is very fast. The camera can be out of the "action zone" and they usually have to wait for the slow motion replays to get this information. In fact, only people sitting on the ringside very close the action can see most of the fight moments in real-time. By adding the haptic feedback to these events the viewers will be able to feel every action even when it is visually ambiguous. On the technical side, the fight's electronic scoring system (e.g., the "Fightmetric" system) is done in the heat of the action and videos are reviewed very fast to deliver accurate information. Thus, the source for the haptic feedback can be available in a reasonable time and need only to be routed to the haptic platform.

In embodiments where scoring systems are used as a source of event data, any form of electronic scoring system may be used in addition to the above-described fight based scoring systems. For example, scoring systems associated with hockey, soccer, football, car racing, horse racing, etc., can be used as a source of event data. As an example, in a hockey scoring system, haptic effects can be related to goals, shots, location of a player when they shoot, check, etc. For systems that have betting data, such as horse racing, generated haptic effects can be related to event data such as odds, changes in the odds, the current likelihood of placing, etc.

Further, any type of sporting event that can provide event data using methods described above, can be used by embodiments of the present invention to generate corresponding haptic effects that enhance the viewing of the event.

Several embodiments are specifically illustrated and/or described herein. However, it will be appreciated that modifications and variations of the disclosed embodiments are covered by the above teachings and within the purview of the appended claims without departing from the spirit and intended scope of the invention.

## Claims

1. A method of generating haptic effects for a sporting event, the method comprising:
receiving sporting event data, wherein the sporting event data comprises different types of event data and each type has a corresponding characteristic;
assigning a different type of haptic effect to each different type of event data;
generating a haptic signal that corresponds to each type of haptic effect; and
transmitting the haptic signal to a haptic output device.

2. The method of claim 1, wherein the sporting event data is received from an electronic scoring system of the sporting event.

3. The method of any one of the preceding claims, wherein the sporting event is a fighting event, and the different types of event data comprises a punch.

4. The method of any one of the preceding claims, wherein the sporting event is a fighting event, and the different types of event data comprises a kick and a knockout.

5. The method of any one of the preceding claims, wherein the haptic output device is part of a haptic playback device that comprises a plurality of haptic output devices, further comprising selecting one of more of the haptic output devices of the plurality of haptic output devices.

6. The method of any one of the preceding claims, wherein the sporting event data is further received from one or more sensors.

7. The method of any one of the preceding claims, wherein the sporting event data is further received from a video analysis of the sporting event.

8. The method of any one of the preceding claims, wherein each haptic effect comprises magnitude, frequency and duration parameters, wherein the parameters correspond to the characteristics of the sporting event data.

9. The method of any one of the preceding claims, wherein the haptic signal comprises a code that corresponds to a pre-stored haptic effect.

10. A computer program product having instructions stored thereon **characterized in that** the medium, when executed by a processor, cause the processor to carry out a method according to one of the preceding claims.

11. A sporting event haptic effect system comprising:
a processor; and
a computer program product according to claim 10 coupled to said processor.

12. An apparatus for generating haptic effects for a sporting event, the apparatus comprising:
means for receiving sporting event data, wherein the sporting event data comprises different types of event data and each type has a corresponding characteristic;
means for assigning a different type of haptic effect to each different type of event data;
means for generating a haptic signal that corresponds to each type of haptic effect; and
means for transmitting the haptic signal to a haptic output device.

13. The apparatus of claim 12, wherein the sporting event data is received from an electronic scoring system of the sporting event, and/orwherein the sporting event data is received from one or more sensors and/or from a video analysis of the sporting event.

14. The apparatus of claim 12 or 13, wherein the sporting event is a fighting event, and the different types of event data comprises a punch, a kick and/or a knockout; and/or wherein the haptic output device is part of a haptic playback device that comprises a plurality of haptic output devices, further comprising selecting one of more of the haptic output devices of the plurality of haptic output devices.

15. The apparatus of any one of the preceding claims 12 to 14,, wherein each haptic effect comprises magnitude, frequency and duration parameters, wherein the parameters correspond to the characteristics of the sporting event data, and/or wherein the haptic signal comprises a code that corresponds to a pre-stored haptic effect.
